# EUROPÄISCHE PATENTSCHRIFT

(11) **EP 1 756 926 B1**
(45) Veröffentlichungstag und Bekanntmachung des Hinweises auf die Patenterteilung: **07.11.2007**
(21) Anmeldenummer: 05714745.6
(22) Anmeldetag: 11.04.2005
(51) Int. Cl.: H02H 7/122, H02M 7/48

(54) **VERFAHREN ZUR FEHLERBEHANDLUNG IN EINER UMRICHTERSCHALTUNG ZUR SCHALTUNG VON DREI SPANNUNGSNIVEAUS**
METHOD FOR ERROR HANDLING IN A CONVERTER CIRCUIT FOR WIRING OF THREE VOLTAGE LEVELS
PROCEDE DE TRAITEMENT DE DEFAUT DANS UN CIRCUIT CONVERTISSEUR POUR LA COMMUTATION DE TROIS NIVEAUX DE TENSION

(30) Priorität: 18.06.2004 EP 04405373
(43) Veröffentlichungstag der Anmeldung: 28.02.2007
(73) Patentinhaber: ABB Schweiz AG, 5400 Baden (CH)
(72) Erfinder: KNAPP, Gerold, CH-5422 Oberehrendingen (CH); HOCHSTUHL, Gerhard, 79761 Waldshut-Tiengen (DE); WIESER, Rudolf, CH-5404 Baden-Dättwil (CH); MEYSENC, Luc, F-38120 Saint Egrève (FR)
(74) Vertreter: ABB Patent Attorneys
(86) Internationale Anmeldenummer: PCT/CH2005/000203
(87) Internationale Veröffentlichungsnummer: WO 2005/124961

(56) Entgegenhaltungen:
- EP-A- 1 398 861
- DE-A- 4 218 749
- US-A1- 2003 086 231
- US-B1- 6 369 543
- PATENT ABSTRACTS OF JAPAN Bd. 1999, Nr. 05, 31. Mai 1999 (1999-05-31) & JP 11 032426 A (SHINKO ELECTRIC CO LTD), 2. Februar 1999 (1999-02-02)

## Beschreibung

### Technisches Gebiet

Die Erfindung bezieht sich auf das Gebiet Ansteuerverfahren von Umrichterschaltungen. Sie geht aus von einem Verfahren zur Fehlerbehandlung in einer Umrichterschaltung zur Schaltung von drei Spannungsniveaus gemäss dem Oberbegriff des Anspruchs 1.

### Stand der Technik

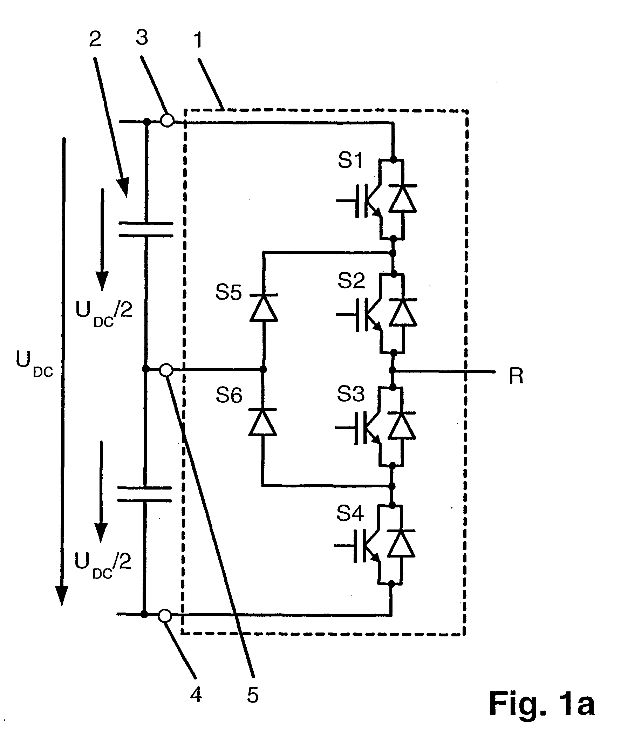

Leistungshalbleiterschalter werden derzeit vermehrt in der Umrichtertechnik und insbesondere in Umrichterschaltungen zur Schaltung von drei Spannungsniveaus eingesetzt. Eine solche Umrichterschaltung zur Schaltung von drei Spannungsniveaus ist in der DE 699 02 227 T2 angegeben. In Fig. 1a ist ein herkömmliches Teilumrichtersystem für eine Phase der Umrichterschaltung gezeigt, wobei das in Fig. 1a gezeigte Teilumrichtersystem einem Teilumrichtersystem der DE 699 02 227 T2 entspricht. Gemäss Fig. 1a ist bei der Umrichterschaltung ein durch zwei in Serie geschaltete Kondensatoren gebildeter Gleichspannungskreis vorgesehen, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Der Kapazitätswert der beiden Kondensatoren ist üblicherweise gleich gross gewählt. Zwischen dem ersten Hauptanschluss und dem zweiten Hauptanschluss liegt eine Gleichspannung an, wobei zwischen dem ersten Hauptanschluss und dem Teilanschluss, d.h. am einen Kondensator folglich die halbe Gleichspannung U_{DC}/2 anliegt und zwischen dem Teilanschluss und dem zweiten Hauptanschluss, d.h. am anderen Kondensator folglich ebenfalls die halbe Gleichspannung an. Die Gleichspannung ist gemäss Fig. 1a mit U_{DC} bezeichnet.

Jedes Teilumrichtersystem der Umrichterschaltung gemäss der DE 699 02 227 T2 beziehungsweise nach Fig. 1a weist einen ersten, zweiten, dritten, vierten, fünften und sechsten Leistungshalbleiterschalter auf, wobei der ersten, zweiten, dritten und vierten Leistungshalbleiterschalter in Serie geschaltet sind und der erste Leistungshalbleiterschalter mit dem ersten Hauptanschluss und der vierte Leistungshalbleiterschalter mit dem zweiten Hauptanschluss verbunden ist. Der Verbindungspunkt des zweiten Leistungshalbleiterschalters mit dem dritten Leistungshalbleiterschalter bildet einen Phasenanschluss. Darüber hinaus ist der fünfte und sechste Leistungshalbleiterschalter in Serie geschaltet und bildet eine Klemmschaltgruppe, wobei der Verbindungspunkt des fünften Leistungshalbleiterschalters mit dem sechsten Leistungshalbleiterschalter mit dem Teilanschluss verbunden ist, der fünfte Leistungshalbleiterschalter mit dem Verbindungspunkt des ersten Leistungshalbleiterschalters mit dem zweiten Leistungshalbleiterschalter verbunden ist und der sechste Leistungshalbleiterschalter mit dem Verbindungspunkt des dritten Leistungshalbleiterschalters mit dem vierten Leistungshalbleiterschalter verbunden ist. Der erste, zweite, dritte und vierte Leistungshalbleiterschalter ist ein ansteuerbarer bidirektionaler Leistungshalbleiterschalter, jeweils gebildet durch einen Bipolartransistor mit isoliert angeordneter Gateelektrode (IGBT) und durch eine zu dem Bipolartransistor antiparallel geschaltete Diode. Der fünfte und sechste Leistungshalbleiterschalter der DE 699 02 227 T2 ist ein nicht ansteuerbarer unidirektionaler Leistungshalbleiterschalter, jeweils gebildet durch eine Diode. In diesem Fall bildet der fünfte und sechste Leistungshalbleiterschalter eine passive Klemmschaltgruppe. Es ist aber auch denkbar, dass der fünfte und sechste Leistungshalbleiterschalter ein ansteuerbarer bidirektionaler Leistungshalbleiterschalter ist, jeweils gebildet durch einen Bipolartransistor mit isoliert angeordneter Gateelektrode (IGBT) und durch eine zu dem Bipolartransistor antiparallel geschaltete Diode. Dann bildet der fünfte und sechste Leistungshalbleiterschalter eine aktive Klemmschaltgruppe.

In der DE 699 02 227 T2 ist weiterhin ein Verfahren zur Fehlerbehandlung in einer Umrichterschaltung zur Schaltung von drei Spannungsniveaus angegeben. Zuerst wird bei einem auftretenden Fehler, beispielsweise aufgrund eines fehlerhaften Leistungshalbleiterschalters, detektiert, ob sich der Fehler in einem oberen Fehlerstrompfad oder in einem unteren Fehlerstrompfad der Umrichterschaltung befindet. Dabei ist der obere Fehlerstrompfad definiert durch einen Fehlerstrom über den ersten, zweiten, dritten und sechsten Leistungshalbleiterschalter oder durch einen Fehlerstrom über den ersten und fünften Leistungshalbleiterschalter. Weiterhin ist der untere Fehlerstrompfad definiert durch einen Fehlerstrom über den zweiten, dritten, vierten und fünften Leistungshalbleiterschalter oder durch einen Fehlerstrom über den vierten und sechsten Leistungshalbleiterschalter. Zur Fehlerbehandlung wird nach einer Fehlerschaltsequenz zunächst der oder die Leistungshalbleiterschalter, welche entsättigen, abgeschalten. Die Überwachung eines jeden Leistungshalbleiterschalters auf Entsättigung mittels einer Entsättigungsüberwachungseinrichtung ist dazu nötig. Eine solche Entsättigung am Leistungshalbleiterschalter, insbesondere am IGBT, tritt beispielsweise dann ein, wenn ein Fehler, wie z.B. ein Kurzschluss, im Hauptstrompfad d.h. zwischen Anode und Kathode bzw. zwischen Kollektor und Emitter des IGBT auftritt. Andere Fehler sind selbstverständlich auch denkbar. In einem solchen Fehlerfall steigt der Strom im Hauptstrompfad typischerweise sehr schnell auf eine hohe Stromamplitude an, so dass das Stromintegral über der Zeit unzulässig hohe Werte annimmt. Während dieses auftretenden Überstromes wird der IGBT in die Entsättigung getrieben, wobei die Anoden-Kathodenspannung am IGBT schnell ansteigt, insbesondere auf den Wert der zu schaltenden Spannung. Dadurch wird ein äusserst kritischer Zustand des IGBT erreicht: Der IGBT führt zum einen im Hauptstrompfad über die Anode und Kathode einen hohen Strom (Überstrom). Zum anderen liegt gleichzeitig eine hohe Anoden-Kathodenspannung zwischen Anode und Kathode des IGBTs an. Daraus resultiert eine extrem hohe momentane Verlustleistung, die den IGBT zerstören kann. Nach der Abschaltung des oder der entsättigten Leistungshalbleiterschalter werden dann die Leistungshalbleiterschalter nach der Fehlerschaltsequenz derart geschaltet, dass ein Phasenkurzschluss in jedem Teilumrichtersystem entsteht, d.h. die Umrichterschaltung ist dann an jeder seiner Phasen kurzgeschlossen.

Durch den Kurzschluss sämtlicher Phasen der Umrichterschaltung nach der DE 699 02 227 T2 kann sich aber ein Kurzschlussstrom in dem vom Fehler betroffenen Teilumrichtersystem sowie in den anderen Teilumrichtersystemen ausbilden, welcher die Leistungshalbleiterschalter belastet. Ein derart belasteter Leistungshalbleiterschalter kann dadurch schneller altern oder sogar beschädigt werden, so dass die Verfügbarkeit Umrichterschaltung stark beeinträchtigt oder schlimmstenfalls nicht mehr gegeben ist.

Die JP-A-11032426, die als nächstliegender Stand der Technick angesehen wird, offenbart ferner ein Verfahren zur Fehlerbehandlung in einer Umrichterschaltung zur Schaltung von drei Spannungsniveaus. Zur Vermeidung einer Überspannung an einem der Leistungshalbleiterschalter wird bei Detektion eines Überstromes über den ersten und zweiten Leistungshalbleiterschalter und bei Detektion eines Überstromes über den dritten und vierten Leistungshalbleiterschalter zuerst der erste und vierte Leistungshalbleiterschalter und dann der zweite und dritte Leistungshalbleiterschalter abgeschaltet.

### Darstellung der Erfindung

Aufgabe der Erfindung ist es deshalb, ein Verfahren zur Fehlerbehandlung in einer Umrichterschaltung zur Schaltung von drei Spannungsniveaus anzugeben, welches im wesentlichen ohne einen phasenseitigen Kurzschluss sämtlicher Phasen der Umrichterschaltung zur Erreichung eines sicheren Betriebszustandes der Umrichterschaltung im Fehlerfall auskommt. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zur Fehlerbehandlung in einer Umrichterschaltung zur Schaltung von drei Spannungsniveaus weist die Umrichterschaltung ein für jede Phase vorgesehenes Teilumrichtersystem auf und umfasst einen durch zwei in Serie geschaltete Kondensatoren gebildeten Gleichspannungskreis, wobei der Gleichspannungskreis einen ersten Hauptanschluss und einen zweiten Hauptanschluss und einen durch die zwei benachbarten und miteinander verbundenen Kondensatoren gebildeten Teilanschluss umfasst. Weiterhin weist jedes Teilumrichtersystem einen ersten, zweiten, dritten und vierten ansteuerbaren bidirektionalen Leistungshalbleiterschalter und einen fünften und sechsten Leistungshalbleiterschalter auf, wobei der erste, zweite, dritte und vierte Leistungshalbleiterschalter in Serie geschaltet sind. Der erste Leistungshalbleiterschalter ist mit dem ersten Hauptanschluss und der vierte Leistungshalbleiterschalter mit dem zweiten Hauptanschluss verbunden. Ferner ist der fünfte und sechste Leistungshalbleiterschalter in Serie geschaltet, wobei der Verbindungspunkt des fünften Leistungshalbleiterschalters mit dem sechsten Leistungshalbleiterschalter mit dem Teilanschluss verbunden ist, der fünfte Leistungshalbleiterschalter mit dem Verbindungspunkt des ersten Leistungshalbleiterschalters mit dem zweiten Leistungshalbleiterschalter verbunden ist und der sechste Leistungshalbleiterschalter mit dem Verbindungspunkt des dritten Leistungshalbleiterschalters mit dem vierten Leistungshalbleiterschalter verbunden ist. Verfahrensmässig wird darüber hinaus ein oberer Fehlerstrompfad oder ein unterer Fehlerstrompfad im Teilumrichtersystem bei Auftreten eines Fehlers im Teilumrichtersystem detektiert, wobei der obere Fehlerstrompfad über den ersten, zweiten, dritten und sechsten Leistungshalbleiterschalter oder über den ersten und fünften Leistungshalbleiterschalter führt und der untere Fehlerstrompfad über den zweiten, dritten, vierten und fünften Leistungshalbleiterschalter oder über den vierten und sechsten Leistungshalbleiterschalter führt. Zudem werden die Leistungshalbleiterschalter nach einer Fehlerschaltsequenz geschaltet. Erfindungsgemäss wird nach der Fehlerschaltsequenz im Falle der Detektion des oberen oder des unteren Fehlerstrompfads der bei der Detektion vorliegende Schaltstatus eines jeden ansteuerbaren bidirektionalen Leistungshalbleiterschalters festgehalten. Dadurch wird vorteilhaft erreicht, dass zunächst keine weitere Ansteuerung der ansteuerbaren bidirektionalen Leistungshalbleiterschalter und damit auch keine Schalthandlung erfolgt. Im Falle der Detektion des oberen Fehlerstrompfads im Teilumrichtersystem wird erfindungsgemäss der erste Leistungshalbleiterschalter und danach der dritte Leistungshalbleiter des Teilumrichtersystems abgeschaltet. Im Falle der Detektion des unteren Fehlerstrompfads im Teilumrichtersystem wird desweiteren erfindungsgemäss der vierte Leistungshalbleiterschalter und danach der zweite Leistungshalbleiterschalter des Teilumrichtersystems abgeschaltet. Vorteilhaft kann dadurch erreicht werden, dass das vom Fehler betroffene Teilumrichtersystem und damit die ganze Umrichterschaltung in einen sicheren Betriebszustand versetzt wird. Vorzugsweise werden die Leistungshalbleiterschalter der vom Fehler nicht betroffenen Teilumrichtersysteme der Umrichterschaltung abgeschaltet. Eine Ausbildung eines Kurzschlussstroms in dem vom Fehler betroffenen Teilumrichtersystem sowie in den anderen Teilumrichtersystemen kann dadurch weitestgehend vermieden werden, so dass die Leistungshalbleiterschalter des vom Fehler betroffenen Teilumrichtersystems sowie die der anderen Teilumrichtersysteme weniger belastet werden. Die Alterung der Leistungshalbleiterschalter kann somit vorteilhaft verlangsamt werden beziehungsweise eine Beschädigung der Leistungshalbleiterschalter kann weitestgehend verhindert werden. Insgesamt erhöht sich damit die Verfügbarkeit der Umrichterschaltung.

Darüber hinaus bildet sich durch die Abschaltung der beiden entsprechenden Leistungshalbleiterschalter bei Detektion eines oberen bzw. unteren Fehlerstrompfades vorteilhaft ein Freilaufpfad des im normalen Betrieb der Umrichterschaltung fliessenden Laststromes aus, wobei der Gleichspannungskreis durch die Abschaltung der beiden entsprechenden Leistungshalbleiterschalter zudem mit Vorteil vor einem Kurzschluss geschützt wird.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1a: eine erste Ausführungsform eines herkömmlichen Teilumrichtersystems einer bekanten Umrichterschaltung zur Schaltung von drei Spannungsniveaus,
- Fig. 1b: eine zweite Ausführungsform eines herkömmlichen Teilumrichtersystems einer bekanten Umrichterschaltung zur Schaltung von drei Spannungsniveaus,
- Fig. 2a: beispielhafte Stromausbildung in einem Teilumrichtersystem gemäss Fig. 1b bei einem Fehler des ersten Leistungshalbleiterschalters des Teilumrichtersystems,
- Fig. 2b: Stromausbildung bei einem Fehler nach Fig. 2a nach erfolgter Fehlerschaltsequenz gemäss dem erfindungsgemässen Verfahren zur Fehlerbehandlung,
- Fig. 3a: beispielhafte Stromausbildung in einem Teilumrichtersystem gemäss Fig. 1 b bei einem Fehler des zweiten Leistungshalbleiterschalters des Teilumrichtersystems,
- Fig. 3b: Stromausbildung bei einem Fehler nach Fig. 3a nach erfolgter Fehlerschaltsequenz gemäss dem erfindungsgemässen Verfahren zur Fehlerbehandlung,
- Fig. 4a: eine beispielhafte Logikschaltung zur Detektion eines oberen und unteren Fehlerstrompfades für ein Teilumrichtersystem nach Fig. 1a und
- Fig. 4b: eine beispielhafte Logikschaltung zur Detektion eines oberen und unteren Fehlerstrompfades für ein Teilumrichtersystem nach Fig. 1b.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

In Fig. 1a ist die bereits eingangs detailliert beschriebene Ausführungsform eines herkömmlichen Teilumrichtersystems 1 einer bekannten Umrichterschaltung zur Schaltung von drei Spannungsniveaus gezeigt. Die Umrichterschaltung weist ein für jede Phase R, S, T vorgesehenes Teilumrichtersystem 1 auf, wobei in Fig. 1a nur ein Teilumrichtersystem 1 für die Phase R dargestellt ist. Die Umrichterschaltung umfasst einen durch zwei in Serie geschaltete Kondensatoren gebildeten Gleichspannungskreis 2, wobei der Gleichspannungskreis 2 einen ersten Hauptanschluss 3 und einen zweiten Hauptanschluss 4 und einen durch die zwei benachbarten und miteinander verbundenen Kondensatoren gebildeten Teilanschluss 5 aufweist. Ferner weist das Teilumrichtersystem 1 einen ersten, zweiten, dritten und vierten ansteuerbaren bidirektionalen Leistungshalbleiterschalter S1, S2, S3, S4 und einen fünften und sechsten Leistungshalbleiterschalter S5, S6 auf. Der jeweilige ansteuerbare bidirektionale Leistungshalbleiterschalter S1, S2, S3, S4 ist insbesondere gebildet durch einen Bipolartransistor mit isoliert angeordneter Gateelektrode (IGBT) und durch eine zu dem Bipolartransistor antiparallel geschaltete Diode. Es ist aber auch denkbar einen vorstehend genannten ansteuerbaren bidirektionalen Leistungshalbleiterschalter beispielsweise als Leistungs-MOSFET mit zusätzlich antiparallel geschalteter Diode auszuführen. Gemäss Fig. 1a ist der fünfte und sechste Leistungshalbleiterschalter S5, S6 ein nicht ansteuerbarer unidirektionaler Leistungshalbleiterschalter, jeweils gebildet durch eine Diode. In diesem Fall bildet der fünfte und sechste Leistungshalbleiterschalter eine passive Klemmschaltgruppe.

Gemäss Fig. 1a sind der erste, zweite, dritte und vierte Leistungshalbleiterschalter S1, S2, S3, S4 in Serie geschaltet und der erste Leistungshalbleiterschalter S1 ist mit dem ersten Hauptanschluss 3 und der vierte Leistungshalbleiterschalter S4 ist mit dem zweiten Hauptanschluss 4 verbunden. Desweiteren ist der fünfte und sechste Leistungshalbleiterschalter S5, S6 in Serie geschaltet, wobei der Verbindungspunkt des fünften Leistungshalbleiterschalters S5 mit dem sechsten Leistungshalbleiterschalter S6 mit dem Teilanschluss 5 verbunden ist, der fünfte Leistungshalbleiterschalter S6 mit dem Verbindungspunkt des ersten Leistungshalbleiterschalters S1 mit dem zweiten Leistungshalbleiterschalter S2 verbunden ist und der sechste Leistungshalbleiterschalter S6 mit dem Verbindungspunkt des dritten Leistungshalbleiterschalters S3 mit dem vierten Leistungshalbleiterschalter S4 verbunden ist.

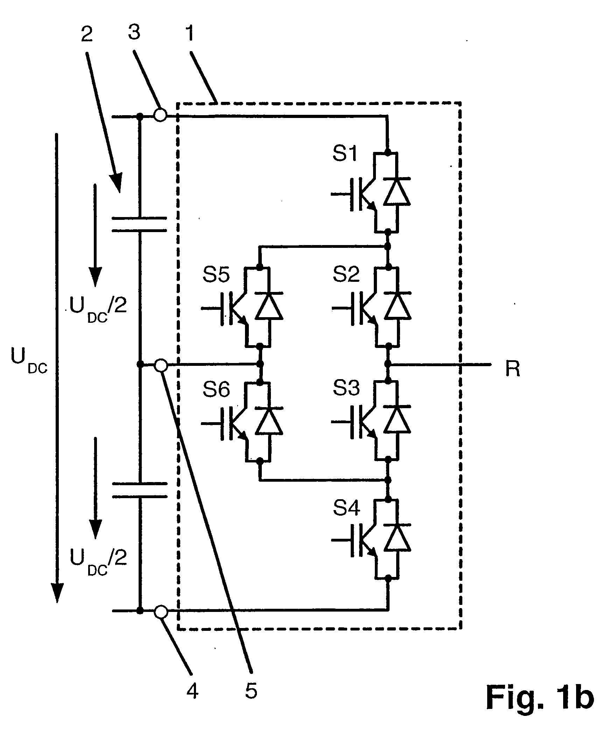

In Fig. 1b ist eine zweite Ausführungsform eines herkömmlichen Teilumrichtersystems 1 einer bekannten Umrichterschaltung zur Schaltung von drei Spannungsniveaus gezeigt. Im Unterschied zur ersten Ausführungsform des Teilumrichtersystems nach Fig. 1 a ist der fünfte und sechste Leistungshalbleiterschalter S5, S6 ebenfalls ein ansteuerbarer bidirektionaler Leistungshalbleiterschalter, jeweils gebildet durch einen Bipolartransistor mit isoliert angeordneter Gateelektrode (IGBT) und durch eine zu dem Bipolartransistor antiparallel geschaltete Diode. Gemäss Fig. 1 b bildet dann der fünfte und sechste Leistungshalbleiterschalter S5, S6 eine aktive Klemmschaltgruppe.

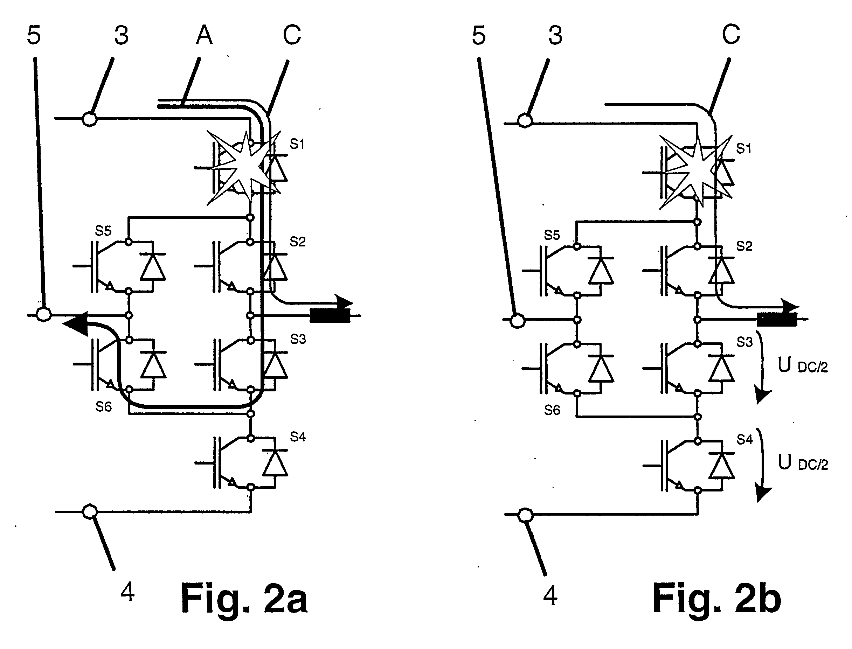

Beim erfindungsgemässen Verfahren zur Fehlerbehandlung der Umrichterschaltung zur Schaltung von drei Spannungsniveaus wird nun bei Auftreten eines Fehlers im Teilumrichtersystem 1 ein oberer Fehlerstrompfad A oder ein unterer Fehlerstrompfad B im Teilumrichtersystem 1 detektiert, wobei der obere Fehlerstrompfad A über den ersten, zweiten, dritten und sechsten Leistungshalbleiterschalter S1, S2, S3, S6 oder über den ersten und fünften Leistungshalbleiterschalter S1, S5 führt und der untere Fehlerstrompfad über den zweiten, dritten, vierten und fünften Leistungshalbleiterschalter S2, S3, S4, S5 oder über den vierten und sechsten Leistungshalbleiterschalter S4, S6 führt. Weiterhin werden die ansteuerbaren bidirektionalen Leistungshalbleiterschalter S1, S2, S3, S4, S5, S6, d.h. nach der Ausführungsform gemäss Fig. 1a die Leistungshalbleiterschalter S1, S2, S3 und S4 und gemäss der Ausführungsform gemäss Fig. 1b die Leistungshalbleiterschalter S1, S2, S3, S4, S5 und S6, nach einer Fehlerschaltsequenz geschaltet. Beispielhaft ist in Fig. 2a eine Stromausbildung im Teilumrichtersystem gemäss Fig. 1 b bei einem Fehler des ersten Leistungshalbleiterschalters S1 des Teilumrichtersystems 1, welcher fehlerhafte erste Leistungshalbleiterschalter S1 durch einen Stern gekennzeichnet ist, gezeigt. Dabei bildet sich einer der oberen Fehlerstrompfade A beispielsweise über den ersten, zweiten, dritten und sechsten Leistungshalbleiterschalter S1, S2, S3, S6, wie bereits vorstehend erwähnt, aus. Weiterhin ist der vor dem Fehler ursprüngliche Strompfad des Laststromes C zur Phase hin in Fig. 2a der Vollständigkeit halber mit eingezeichnet.

Erfindungsgemäss wird nach der Fehlerschaltsequenz im Falle der Detektion des oberen oder des unteren Fehlerstrompfads A, B der bei der Detektion vorliegende Schaltstatus eines jeden ansteuerbaren bidirektionalen Leistungshalbleiterschalters S1, S2, S3, S4 festgehalten. Mit Vorteil kann dadurch erreicht werden, dass zunächst keine weitere Ansteuerung der ansteuerbaren bidirektionalen Leistungshalbleiterschalter S1, S2, S3, S4 und damit auch keine Schalthandlung erfolgt. Weiterhin wird im Falle der Detektion des oberen Fehlerstrompfads A nach der Fehlerschaltsequenz der erste Leistungshalbleiterschalter S1 und danach der dritte Leistungshalbleiterschalter S3 abgeschaltet. Darüber hinaus wird im Falle der Detektion des unteren Fehlerstrompfads B nach der Fehlerschaltsequenz der vierte Leistungshalbleiterschalter S4 und danach der zweite Leistungshalbleiterschalter S2 abgeschaltet. Das vom Fehler betroffene Teilumrichtersystem 1 und damit die ganze Umrichterschaltung wird durch die vorstehend beschriebenen Massnahmen mit Vorteil in einen sicheren Betriebszustand versetzt. Eine Ausbildung eines Kurzschlussstroms in dem vom Fehler betroffenen Teilumrichtersystem 1 sowie in den anderen Teilumrichtersystemen 1 kann dadurch nahezu gänzlich vermieden werden, so dass die Leistungshalbleiterschalter S1, S2, S3, S4, S5, S6 des vom Fehler betroffenen Teilumrichtersystems 1 sowie die der anderen Teilumrichtersysteme 1 der anderen Phasen R, S, T weniger belastet werden. Die Alterung der Leistungshalbleiterschalter S1, S2, S3, S4, S5, S6 kann somit vorteilhaft verlangsamt werden beziehungsweise eine Beschädigung der Leistungshalbleiterschalter S1, S2, S3, S4, S5, S6 kann weitestgehend verhindert werden. Insgesamt erhöht sich damit die Verfügbarkeit der Umrichterschaltung. Zudem vereinfacht sich die Wartung der Umrichterschaltung, da in der Regel bei einem Fehler weniger Leistungshalbleiterschalter S1, S2, S3, S4, S5, S6 beschädigt werden und damit auch weniger Leistungshalbleiterschalter S1, S2, S3, S4, S5, S6 getauscht werden müssen.

Ferner bildet sich durch die Abschaltung der beiden entsprechenden Leistungshalbleiterschalter S1, S2, S3, S4 bei Detektion eines oberen bzw. unteren Fehlerstrompfades A, B vorteilhaft ein Freilaufpfad des im normalen Betrieb der Umrichterschaltung fliessenden Laststromes C aus, wobei der Gleichspannungskreis durch die Abschaltung der beiden entsprechenden Leistungshalbleiterschalter zudem mit Vorteil vor einem Kurzschluss geschützt wird. In Fig. 2b ist dazu beispielhaft eine Stromausbildung bei einem Fehler nach Fig. 2a nach erfolgter und vorstehend detaillierter beschriebener Fehlerschaltsequenz gemäss dem erfindungsgemässe Verfahren zur Fehlerbehandlung dargestellt. Darin ist der erste Leistungshalbleiterschalter S1 und der dritte Leistungshalbleiterschalter S3 abgeschaltet, wobei der vierte Leistungshalbleiterschalter S4 sowieso ausgeschaltet ist und am dritten und vierten Leistungshalbleiterschalter S3, S4 jeweils die halbe Gleichspannung U_{DC}/2 des Gleichspannungskreises anliegt und der Laststrom C über den fehlerhaften ersten und zweiten Leistungshalbleiterschalters S1, S2, wie vor dem Fehler des ersten Leistungshalbleiterschalters S1, fliesst. Somit ist insgesamt ein sicherer Betriebszustand des vom Fehler betroffenen Teilumrichtersystems 1 und dadurch auch der gesamten Umrichterschaltung erreicht.

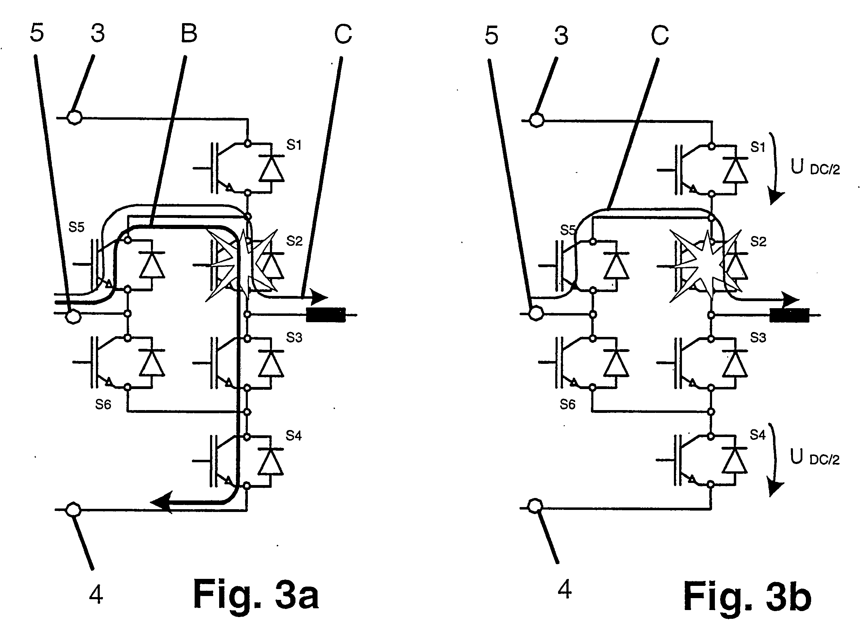

Beispielhaft ist in Fig. 3a eine Stromausbildung im Teilumrichtersystem 1 gemäss Fig. 1 b bei einem Fehler des zweiten Leistungshalbleiterschalters S2 des Teilumrichtersystems 1, welcher fehlerhafte zweite Leistungshalbleiterschalter S2 durch einen Stern gekennzeichnet ist, gezeigt. Dabei bildet einer der unteren Fehlerstrompfade B beispielsweise über den zweiten, dritten, vierten und fünften Leistungshalbleiterschalter S2, S3, S4, S5, wie bereits vorstehend erwähnt, aus. Weiterhin ist der vor dem Fehler ursprüngliche Strompfad des Laststromes C zur Phase hin in Fig. 3a der Vollständigkeit halber mit eingezeichnet. In Fig. 3b ist schliesslich beispielhaft eine Stromausbildung bei einem Fehler nach Fig. 3a nach erfolgter und vorstehend detaillierter beschriebener Fehlerschaltsequenz gemäss dem erfindungsgemässen Verfahren zur Fehlerbehandlung dargestellt. Darin ist der vierte Leistungshalbleiterschalter S4 und der zweite Leistungshalbleiterschalter S2 abgeschaltet, wobei der erste Leistungshalbleiterschalter S1 sowieso ausgeschaltet ist, am ersten und vierten Leistungshalbleiterschalter S1, S4 jeweils die halbe Gleichspannung U_{DC}/2 des Gleichspannungskreises anliegt und der Laststrom C über den fünften und fehlerhaften zweiten Leistungshalbleiterschalters S5, S2, wie vor dem Fehler des zweiten Leistungshalbleiterschalters S2, fliesst. Somit ist insgesamt ein sicherer Betriebszustand des vom Fehler betroffenen Teilumrichtersystems 1 und dadurch auch der gesamten Umrichterschaltung auch bei einem Fehler im unteren Fehlerstrompfad B erzielt.

Gemäss Fig. 1 b ist, wie bereits vorstehend schon beschrieben, der fünfte und sechste Leistungshalbleiterschalter S5, S6 jeweils ein ansteuerbarer bidirektionaler Leistungshalbleiterschalter. Beim erfindungsgemässen Verfahren wird nun im Falle der Detektion des oberen Fehlerstrompfads A nach der Fehlerschaltsequenz der sechste Leistungshalbleiterschalter S6 vor der Abschaltung des ersten Leistungshalbleiterschalters S1 eingeschaltet, insbesondere dann, wenn der sechste Leistungshalbleiterschalter S6 zuvor noch nicht eingeschaltet war. Im Falle der Detektion des unteren Fehlerstrompfads B wird nach der Fehlerschaltsequenz der fünfte Leistungshalbleiterschalter S5 vor der Abschaltung des vierten Leistungshalbleiterschalters 4 eingeschaltet, insbesondere dann, wenn der fünfte Leistungshalbleiterschalter S5 zuvor noch nicht eingeschaltet war. Dadurch wird der bereits erwähnte sichere Betriebszustand des Teilumrichtersystems nach Fig. 1 b und damit der gesamten Umrichterschaltung erreicht.

Es hat sich als vorteilhaft erwiesen, dass im Falle der Detektion des oberen Fehlerstrompfads A der dritte Leistungshalbleiterschalter S3 mit einer wählbaren Verzögerungszeit tᵥ zum ersten Leistungshalbleiterschalter S1 abgeschaltet wird, und dass im Falle der Detektion des unteren Fehlerstrompfads B der zweite Leistungshalbleiterschalter S2 mit einer wählbaren Verzögerungszeit tᵥ zum vierten Leistungshalbleiterschalter S4 abgeschaltet wird. Dadurch wird gewährleistet, dass der erste Leistungshalbleiterschalter S1 schon abgeschaltet ist, wenn der dritte Leistungshalbleiterschalter S3 abgeschaltet wird, und dass der vierte Leistungshalbleiterschalter S4 schon abgeschaltet ist, wenn der zweite Leistungshalbleiterschalter S2 abgeschaltet wird. Vorzugsweise wird die Verzögerungszeit tᵥ in der Grössenordnung von 1µs bis 5µs gewählt.

Erfindungsgemäss werden die ansteuerbaren bidirektionalen Leistungshalbleiterschalter S1, S2, S3, S4, S5, S6 der vom Fehler nicht betroffenen Teilumrichtersysteme 1 der Umrichterschaltung abgeschaltet, wodurch zudem sichergestellt werden kann, dass eine Ausbildung eines Kurzschlussstroms in den vom Fehler nicht betroffenen Teilumrichtersystemen 1, wie er sich bei Verfahren nach dem Stand der Technik durch Kurzschliessen sämtlicher Phasen R, S. T der Umrichterschaltung einstellt, unterbleibt. Die Leistungshalbleiterschalter S1, S2, S3, S4, S5, S6 der vom Fehler nicht betroffenen Teilumrichtersysteme 1 werden somit im Vergleich zu bekannten Verfahren weniger belastet. Vorzugsweise wird bei der Abschaltung der ansteuerbaren bidirektionalen Leistungshalbleiterschalter S1, S2, S3, S4, S5, S6 der vom Fehler nicht betroffenen Teilumrichtersysteme 1 der Umrichterschaltung jeweils der "äussere" ansteuerbare bidirektionalen Leistungshalbleiterschalter S1, S4, d.h. der erste beziehungsweise der vierte ansteuerbaren bidirektionalen Leistungshalbleiterschalter S1, S4, vor dem zugehörigen "inneren" ansteuerbaren bidirektionalen Leistungshalbleiterschalter S2, S3, d.h. der zweite beziehungsweise dritte ansteuerbaren bidirektionalen Leistungshalbleiterschalter S2, S3, abgeschaltet.

Im Folgenden wird auf die Detektionsmöglichkeiten des oberen beziehungsweise unteren Fehlerstrompfades A, B näher eingegangen.

Zur Detektion des oberen oder unteren Fehlerstrompfades A, B wird erfindungsgemäss jeder ansteuerbare bidirektionale Leistungshalbleiterschalter S1, S2, S3, S4, S5, S6 der Teilumrichterschaltungen 1 der Phasen R, S, T auf Entsättigung hin überwacht und weiterhin ein Strom über den Teilanschluss 5 einer jeden Teilumrichterschaltung 1 auf seine Richtung hin überwacht. Zur Überwachung der Richtung des Stromes über den Teilanschluss 5 wird der Strom vorzugsweise auf einen Schwellwert hin überwacht beziehungsweise mit einem Schwellwert verglichen, um eine Detektion der Richtung des Stromes auch bei einem verrauschten Strom zu gewährleisten. Der obere Fehlerstrompfad A wird dann detektiert, wenn der erste, zweite, dritte, fünfte oder sechste ansteuerbare bidirektionale Leistungshalbleiterschalter S1, S2, S3, S5, S6 entsättigt und ein Strom über den Teilanschluss 5 in Richtung des Gleichspannungskreises 2 detektiert wird. Hingegen wird der untere Fehlerstrompfad B bei einer Entsättigung des zweiten, dritten, vierten, fünften oder sechsten ansteuerbaren bidirektionalen Leistungshalbleiterschalters S2, S3, S4, S5, S6 und einem Strom über den Teilanschluss 5 aus Richtung des Gleichspannungskreises 2 detektiert. Zur Überwachung der Stromrichtung des Stromes über den Teilanschluss 5 ist am Teilanschluss 5 vorzugsweise ein entsprechender Sensor vorgesehen.

Alternativ zur vorstehend beschriebenen Detektion des oberen oder unteren Fehlerstrompfades A, B wird ebenfalls jeder ansteuerbaren bidirektionalen Leistungshalbleiterschalter S1, S2, S3, S4, S5, S6 auf Entsättigung hin überwacht, wobei dann im Unterschied ein Strom über den ersten Hauptanschluss 3 und ein Strom über den zweiten Hauptanschluss 4 überwacht wird. Zur Überwachung des jeweiligen Stromes über den ersten Hauptanschluss 3 beziehungsweise über den zweiten Hauptanschluss 4 wird der jeweilige Strom vorzugsweise auf einen Schwellwert hin überwacht, um eine Detektion des jeweiligen Stromes auch bei einem verrauschten Strom zu gewährleisten. Der obere Fehlerstrompfad A wird dann detektiert, wenn der erste, zweite, dritte, fünfte oder sechste ansteuerbare bidirektionale Leistungshalbleiterschalter S1, S2, S3, S5, S6 entsättigt und ein Strom über den ersten Hauptanschluss 3 detektiert wird. Dagegen wird der untere Fehlerstrompfad B bei einer Entsättigung des zweiten, dritten, vierten, fünften oder sechsten ansteuerbaren bidirektionalen Leistungshalbleiterschalters S2, S3, S4, S5, S6 und ein Strom über den zweiten Hauptanschluss 4 detektiert wird. Zur Überwachung des Stromes im oberen beziehungsweise unteren Fehlerstrompfad A, B ist am ersten Hauptanschluss 3 und am zweiten Hauptanschluss 4 vorzugsweise ein entsprechender Sensor vorgesehen, der lediglich einen Strom, jedoch keine Richtung des Stromes zu detektieren in der Lage sein muss. Solch ein Stromsensor ist einfach und damit robust aufgebaut.

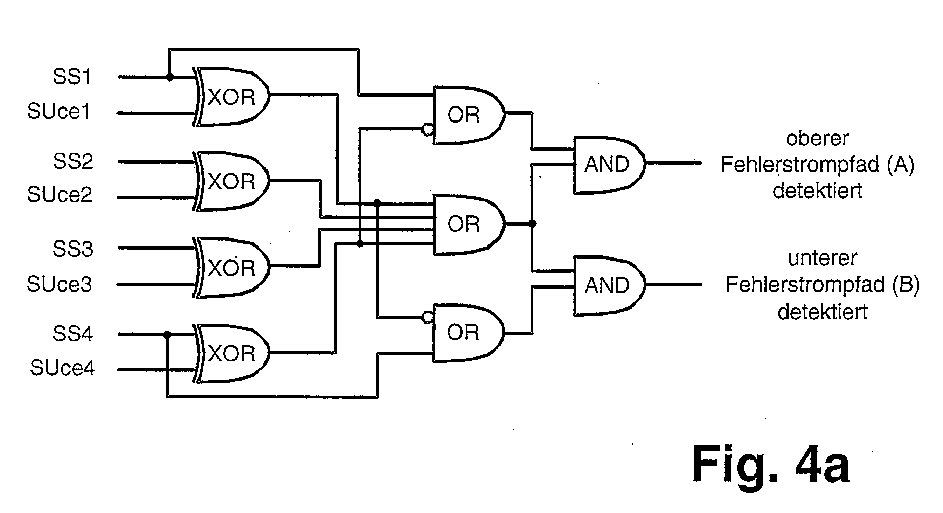

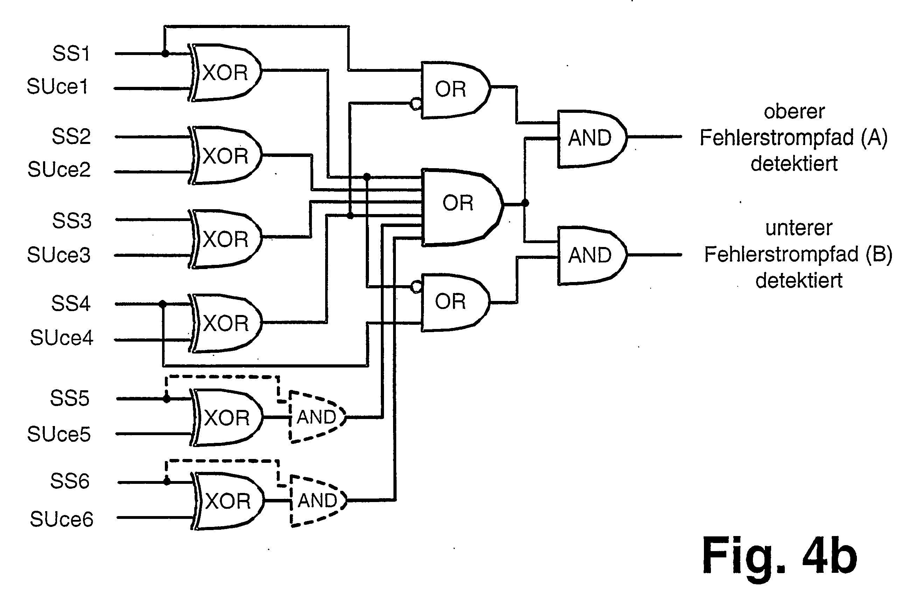

Alternativ zu den vorstehend beschriebenen Detektionen des oberen oder unteren Fehlerstrompfades A, B wird zunächst die Anoden-Kathoden-Spannung Uce allgemein eines jeden ansteuerbaren bidirektionalen Leistungshalbleiterschalters S1, S2, S3, S4, S5, S6 auf einen Schwellwert Uce,th hin überwacht. Im Speziellen erfolgt diese Anoden-Kathoden-Spannungsüberwachung beim Teilumrichtersystem 1 gemäss Fig. 1a bei den ansteuerbaren bidirektionalen Leistungshalbleiterschalter S1, S2, S3 und S4 und beim Teilumrichtersystem 1 gemäss Fig. 1 b bei den ansteuerbaren bidirektionalen Leistungshalbleiterschalter S1, S2, S3, S4, S5 und S6. In Fig. 4a ist eine beispielhafte Logikschaltung zur Detektion eines oberen und unteren Fehlerstrompfades A, B für das Teilumrichtersystem 1 nach Fig. 1a gezeigt. Weiterhin ist in Fig. 4b eine beispielhafte Logikschaltung zur Detektion eines oberen und unteren Fehlerstrompfades für das Teilumrichtersystem 1 nach Fig. 1 b dargestellt. Die in Fig. 4a gezeigten Schaltstatussignale SS1, SS2, SS3 und SS4 für die ansteuerbaren bidirektionalen Leistungshalbleiterschalter S1, S2, S3 und S4 und die in Fig. 4b gezeigten Schaltstatussignale SS1, SS2, SS3, SS4, SS5 und SS6 für die ansteuerbaren bidirektionalen Leistungshalbleiterschalter S1, S2, S3, S4, S5 und S6 sind logische Grössen, wobei das Schaltstatussignal SS1, SS2, SS3, SS4, SS5, US6 logisch "0" für einen ausgeschalteten zugehörigen ansteuerbaren bidirektionalen Leistungshalbleiterschalter S1, S2, S3, S4, S5, S6 und logisch "1" für einen eingeschalteten zugehörigen ansteuerbaren bidirektionalen Leistungshalbleiterschalter S1, S2, S3, S4, S5, S6 ist. Darüber hinaus sind die in Fig. 4a gezeigten Schwellwertsignale SUce1, SUce2, SUce3 und SUce4 für die auf den Schwellwert Uce,th der zugehörigen Anoden-Kathoden-Spannung Uce hin überwachten ansteuerbaren bidirektionalen Leistungshalbleiterschalter S1, S2, S3, S4 und die in Fig. 4b gezeigten Schwellwertsignale SUce1, SUce2, SUce3, SUce4, SUce5 und SUce6 der zugehörigen ansteuerbaren bidirektionalen Leistungshalbleiterschalter S1, S2, S3, S4, S5, S6 logische Grössen, wobei das Schwellwertsignal SUce1, SUce2, SUce3, SUce4, SUce5, SUce6 logisch "0" für eine den Schwellwert SUce überschreitende Anoden-Kathoden-Spannung Uce des entsprechenden Leistungshalbleiterschalters S1, S2, S3, S4, S5, S6 und logisch "1" für eine den Schwellwert Uce,th unterschreitende Anoden-Kathoden-Spannung Uce des entsprechenden Leistungshalbleiterschalters S1, S2, S3, S4, S5, S6 anliegt.

Der obere Fehlerstrompfad A wird nun erfindungsgemäss bei Überschreiten des Schwellwertes Uce,th bei einem oder mehreren eingeschalteten ansteuerbaren bidirektionalen Leistungshalbleiterschaltern S1, S2, S3, S4, S5, S6 und ausgeschaltetem vierten ansteuerbaren bidirektionalen Leistungshalbleiterschalter S4 mit überschrittenem Schwellwert Uce,th oder bei Überschreiten des Schwellwertes Uce,th bei einem oder mehreren eingeschalteten ansteuerbaren bidirektionalen Leistungshalbleiterschaltern S1, S2, S3, S4, S5, S6 und eingeschaltetem ersten ansteuerbaren bidirektionalen Leistungshalbleiterschalter S1 detektiert. Zudem wird der obere Fehlerstrompfad A erfindungsgemäss auch bei Unterschreiten des Schwellwertes Uce,th bei einem oder mehreren ausgeschalteten ansteuerbaren bidirektionalen Leistungshalbleiterschaltern S1, S2, S3, S4 und ausgeschaltetem vierten ansteuerbaren bidirektionalen Leistungshalbleiterschalter S4 mit überschrittenem Schwellwert Uce,th oder bei Unterschreiten des Schwellwertes Uce,th bei einem oder mehreren ausgeschalteten ansteuerbaren bidirektionalen Leistungshalbleiterschaltern S1, S2, S3, S4 und eingeschaltetem ersten ansteuerbaren bidirektionalen Leistungshalbleiterschalter S1 detektiert.

Hingegen wird der untere Fehlerstrompfad B erfindungsgemäss bei Überschreiten des Schwellwertes Uce,th bei einem oder mehreren eingeschalteten ansteuerbaren bidirektionalen Leistungshalbleiterschaltern S1, S2, S3, S4, S5, S6 und ausgeschaltetem ersten ansteuerbaren bidirektionalen Leistungshalbleiterschalter S1 mit überschrittenem Schwellwert Uce,th oder bei Überschreiten des Schwellwertes Uce,th bei einem oder mehreren eingeschalteten ansteuerbaren bidirektionalen Leistungshalbleiterschaltern S1, S2, S3, S4, S5, S6 und eingeschaltetem vierten ansteuerbaren bidirektionalen Leistungshalbleiterschalter S4 detektiert. Zudem wird der untere Fehlerstrompfad B erfindungsgemäss auch bei Unterschreiten des Schwellwertes Uce,th bei einem oder mehreren ausgeschalteten ansteuerbaren bidirektionalen Leistungshalbleiterschaltern S1, S2, S3, S4 und ausgeschaltetem ersten ansteuerbaren bidirektionalen Leistungshalbleiterschalter S1 mit überschrittenem Schwellwert Uce,th oder bei Unterschreiten des Schwellwertes Uce,th bei einem oder mehreren ausgeschalteten ansteuerbaren bidirektionalen Leistungshalbleiterschaltern S1, S2, S3, S4 und eingeschaltetem vierten ansteuerbaren bidirektionalen Leistungshalbleiterschalter S4 detektiert. Vorteilhaft kann durch diese Art der Detektion des oberen und unteren Fehlerstrompfades A, B auf Stromsensoren zur Detektion gänzlich verzichtet werden, so dass sich der Verkabelungs- und Materialaufwand vorteilhaft reduziert und das Teilumrichtersystem somit einfacher und kostengünstiger aufgebaut werden kann. Darüberhinaus reduziert sich vorteilhaft die Störanfälligkeit des Teilumrichtersystems 1 und damit der gesamten Umrichterschaltung, wobei daraus eine erhöhte Verfügbarkeit der gesamten Umrichterschaltung resultiert.

### Bezugszeichenliste

- 1: Teilumrichtersystem
- 2: Gleichspannungskreis
- 3: erster Hauptanschluss
- 4: zweiter Hauptanschluss
- 5: Teilanschluss
- S1: erste Leistungshalbleiterschalter
- S2: zweiter Leistungshalbleiterschalter
- S3: dritter Leistungshalbleiterschalter
- S4: vierter Leistungshalbleiterschalter
- S5: fünfter Leistungshalbleiterschalter
- S6: sechster Leistungshalbleiterschalter
- A: oberer Fehlerstrompfad
- B: unterer Fehlerstrompfad
- C: Laststrompfad

## Patentansprüche

1. Verfahren zur Fehlerbehandlung in einer Umrichterschaltung zur Schaltung von drei Spannungsniveaus, bei dem die Umrichterschaltung ein für jede Phase (R, S, T) vorgesehenes Teilumrichtersystem (1) aufweist und einen durch zwei in Serie geschaltete Kondensatoren gebildeten Gleichspannungskreis (2) umfasst, wobei der Gleichspannungskreis (2) einen ersten Hauptanschluss (3) und einen zweiten Hauptanschluss (4) und einen durch die zwei benachbarten und miteinander verbundenen Kondensatoren gebildeten Teilanschluss (5) umfasst, und welches einen ersten, zweiten, dritten und vierten ansteuerbaren bidirektionalen Leistungshalbleiterschalter (S1, S2, S3, S4) und einen fünften und sechsten Leistungshalbleiterschalter (S5, S6) aufweist, wobei der erste, zweite, dritte und vierte Leistungshalbleiterschalter (S1, S2, S3, S4) in Serie geschaltet sind und der erste Leistungshalbleiterschalter (S1) mit dem ersten Hauptanschluss (3) und der vierte Leistungshalbleiterschalter (S4) mit dem zweiten Hauptanschluss (4) verbunden ist, und wobei der fünfte und sechste Leistungshalbleiterschalter (S5, S6) in Serie geschaltet ist, der Verbindungspunkt des fünften Leistungshalbleiterschalters (S5) mit dem sechsten Leistungshalbleiterschalter (S6) mit dem Teilanschluss (5) verbunden ist, der fünfte Leistungshalbleiterschalter (S6) mit dem Verbindungspunkt des ersten Leistungshalbleiterschalters (S1) mit dem zweiten Leistungshalbleiterschalter (S2) verbunden ist und der sechste Leistungshalbleiterschalter (S6) mit dem Verbindungspunkt des dritten Leistungshalbleiterschalters (S3) mit dem vierten Leistungshalbleiterschalter (S4) verbunden ist,
bei dem ein oberer Fehlerstrompfad (A) oder ein unterer Fehlerstrompfad (B) im Teilumrichtersystem (1) detektiert wird, wobei der obere Fehlerstrompfad (A) über den ersten, zweiten, dritten und sechsten Leistungshalbleiterschalter (S1, S2, S3, S6) oder über den ersten und fünften Leistungshalbleiterschalter (S1, S5) führt und der untere Fehlerstrompfad über den zweiten, dritten, vierten und fünften Leistungshalbleiterschalter (S2, S3, S4, S5) oder über den vierten und sechsten Leistungshalbleiterschalter (S4, S6) führt, und
bei dem die ansteuerbaren bidirektionalen Leistungshalbleiterschalter (S1, S2, S3, S4) nach einer Fehlerschaltsequenz geschaltet werden,
**dadurch gekennzeichnet,**
**dass** nach der Fehlerschaltsequenz im Falle der Detektion des oberen oder des unteren Fehlerstrompfads (A, B) der bei der Detektion vorliegende Schaltstatus eines jeden ansteuerbaren bidirektionalen Leistungshalbleiterschalters (S1, S2, S3, S4) festgehalten wird,
**dass** im Falle der Detektion des oberen Fehlerstrompfads (A) der erste Leistungshalbleiterschalter (S1) und danach der dritte Leistungshalbleiter (S3) abgeschaltet wird, und dass im Falle der Detektion des unteren Fehlerstrompfads (B) der vierte Leistungshalbleiterschalter (S4) und danach der zweite Leistungshalbleiter (S2) abgeschaltet wird.

2. Verfahren nach Anspruch 1, **dadurch gekennzeichnet, dass** der fünfte und sechste Leistungshalbleiterschalter (S5, S6) ein ansteuerbarer bidirektionaler Leistungshalbleiterschalter ist, wobei im Falle der Detektion des oberen Fehlerstrompfads (A) der sechste Leistungshalbleiterschalter (S6) vor der Abschaltung des ersten Leistungshalbleiterschalters (S1) eingeschaltet wird und im Falle der Detektion des unteren Fehlerstrompfads (B) der fünfte Leistungshalbleiterschalter (S5) vor der Abschaltung des vierten Leistungshalbleiterschalters (4) eingeschaltet wird.

3. Verfahren nach Anspruch 1 oder 2, **dadurch gekennzeichnet, dass** im Falle der Detektion des oberen Fehlerstrompfads (A) der dritte Leistungshalbleiterschalter (S3) mit einer wählbaren Verzögerungszeit (tᵥ) zum ersten Leistungshalbleiterschalter (S1) abgeschaltet wird, und dass im Falle der Detektion des unteren Fehlerstrompfads (B) der zweite Leistungshalbleiterschalter (S2) mit einer wählbaren Verzögerungszeit (tᵥ) zum vierten Leistungshalbleiterschalter (S4) abgeschaltet wird

4. Verfahren nach Anspruch 3, **dadurch gekennzeichnet, dass** die Verzögerungszeit (tᵥ) in der Grössenordnung von 1µs bis 5µs gewählt wird.

5. Verfahren nach einem der vorhergehenden Ansprüche, **dadurch gekennzeichnet, dass** die ansteuerbaren bidirektionalen Leistungshalbleiterschalter (S1, S2, S3, S4, S5, S6) der vom Fehler nicht betroffenen Teilumrichtersysteme (1) abgeschaltet werden.

6. Verfahren nach einem der Ansprüche 1 bis 5, **dadurch gekennzeichnet, dass** zur Detektion des oberen oder unteren Fehlerstrompfades (A, B) jeder ansteuerbare bidirektionale Leistungshalbleiterschalter (S1, S2, S3, S4, S5, S6) auf Entsättigung hin überwacht wird, und
dass ein Strom über den Teilanschluss (5) auf seine Richtung hin überwacht wird.

7. Verfahren nach Anspruch 6, **dadurch gekennzeichnet, dass** der obere Fehlerstrompfad (A) bei einer Entsättigung des ersten, zweiten, dritten, fünften oder sechsten ansteuerbaren bidirektionalen Leistungshalbleiterschalters (S1, S2, S3, S5, S6) und einem Strom über den Teilanschluss (5) in Richtung des Gleichspannungskreises (5) detektiert wird, und
dass der untere Fehlerstrompfad (B) bei einer Entsättigung des zweiten, dritten, vierten, fünften oder sechsten ansteuerbaren bidirektionalen Leistungshalbleiterschalters (S2, S3, S4, S5, S6) und einem Strom über den Teilanschluss (5) aus Richtung des Gleichspannungskreises (5) detektiert wird.

8. Verfahren nach einem der Ansprüche 1 bis 5, **dadurch gekennzeichnet, dass** zur Detektion des oberen oder unteren Fehlerstrompfades (A, B) jeder ansteuerbaren bidirektionalen Leistungshalbleiterschalter (S1, S2, S3, S4, S5, S6) auf Entsättigung hin überwacht wird, und
dass ein Strom über den ersten Hauptanschluss (3) und ein Strom über den zweiten Hauptanschluss (4) überwacht wird.

9. Verfahren nach Anspruch 8, **dadurch gekennzeichnet, dass** der obere Fehlerstrompfad (A) bei einer Entsättigung des ersten, zweiten, dritten, fünften oder sechsten ansteuerbaren bidirektionalen Leistungshalbleiterschalters (S1, S2, S3, S5, S6) und einem Strom über den ersten Hauptanschluss (3) detektiert wird, und dass der untere Fehlerstrompfad (B) bei einer Entsättigung des zweiten, dritten, vierten, fünften oder sechstens ansteuerbaren bidirektionalen Leistungshalbleiterschalters (S2, S3, S4, S5, S6) und einem Strom über den zweiten Hauptanschluss (4) detektiert wird.

10. Verfahren nach einem der Ansprüche 1 bis 5, **dadurch gekennzeichnet, dass** die Anoden-Kathoden-Spannung (Uce) eines jeden ansteuerbaren bidirektionalen Leistungshalbleiterschalters (S1, S2, S3, S4, S5, S6) auf einen Schwellwert (Uce,th) hin überwacht wird,
dass der obere Fehlerstrompfad (A)
(a1) bei Überschreiten des Schwellwertes (Uce,th) bei einem oder mehreren eingeschalteten ansteuerbaren bidirektionalen Leistungshalbleiterschaltern (S1, S2, S3, S4, S5, S6) und ausgeschaltetem vierten ansteuerbaren bidirektionalen Leistungshalbleiterschalter (S4) mit überschrittenem Schwellwert (Uce,th) oder
(b1) bei Überschreiten des Schwellwertes (Uce,th) bei einem oder mehreren eingeschalteten ansteuerbaren bidirektionalen Leistungshalbleiterschaltern (S1, S2, S3, S4, S5, S6) und eingeschaltetem ersten ansteuerbaren bidirektionalen Leistungshalbleiterschalter (S1) oder
(c1) bei Unterschreiten des Schwellwertes (Uce,th) bei einem oder mehreren ausgeschalteten ansteuerbaren bidirektionalen Leistungshalbleiterschaltern (S1, S2, S3, S4) und ausgeschaltetem vierten ansteuerbaren bidirektionalen Leistungshalbleiterschalter (S4) mit überschrittenem Schwellwert (Uce,th) oder
(d1) bei Unterschreiten des Schwellwertes (Uce,th) bei einem oder mehreren ausgeschalteten ansteuerbaren bidirektionalen Leistungshalbleiterschaltern (S1, S2, S3, S4) und eingeschaltetem ersten ansteuerbaren bidirektionalen Leistungshalbleiterschalter (S1) detektiert wird,
und dass der untere Fehlerstrompfad (B)
(a2) bei Überschreiten des Schwellwertes (Uce,th) bei einem oder mehreren eingeschalteten ansteuerbaren bidirektionalen Leistungshalbleiterschaltern (S1, S2, S3, S4, S5, S6) und ausgeschaltetem ersten ansteuerbaren bidirektionalen Leistungshalbleiterschalter (S1) mit überschrittenem Schwellwert (Uce,th) oder
(b2) bei Überschreiten des Schwellwertes (Uce,th) bei einem oder mehreren eingeschalteten ansteuerbaren bidirektionalen Leistungshalbleiterschaltern (S1, S2, S3, S4, S5, S6) und eingeschaltetem vierten ansteuerbaren bidirektionalen Leistungshalbleiterschalter (S4) oder
(c2) bei Unterschreiten des Schwellwertes (Uce,th) bei einem oder mehreren ausgeschalteten ansteuerbaren bidirektionalen Leistungshalbleiterschaltern (S1, S2, S3, S4) und ausgeschaltetem ersten ansteuerbaren bidirektionalen Leistungshalbleiterschalter (S1) mit überschrittenem Schwellwert (Uce,th) oder
(d2) bei Unterschreiten des Schwellwertes (Uce,th) bei einem oder mehreren ausgeschalteten ansteuerbaren bidirektionalen Leistungshalbleiterschaltern (S1, S2, S3, S4) und eingeschaltetem vierten ansteuerbaren bidirektionalen Leistungshalbleiterschalter (S4) detektiert wird.

## Claims

1. Method for fault handling in a converter circuit for switching three voltage levels, in which the converter circuit has a converter subsystem (1) provided for each phase (R,S,T) and comprises a DC voltage circuit (2) formed by two series-connected capacitors, where the DC voltage circuit (2) comprises a first principal connection (3) and a second principal connection (4) and a subconnection (5) formed by the two adjacent and interconnected capacitors, and which system has a first, a second, a third and a fourth actuatable bidirectional power semiconductor switch (S1, S2, S3, S4) and a fifth and a sixth power semiconductor switch (S5, S6), the first, second, third and fourth power semiconductor switches (S1, S2, S3, S4) being connected in series and the first power semiconductor switch (S1) being connected to the first principal connection (3) and the fourth power semiconductor switch (S4) being connected to the second principal connection (4), and where the fifth and sixth power semiconductor switches (S5, S6) are connected in series, the junction between the fifth power semiconductor switch (S5) and the sixth power semiconductor switch (S6) is connected to the subconnection (5), the fifth power semiconductor switch (S6) is connected to the junction between the first power semiconductor switch (S1) and the second power semiconductor switch (S2), and the sixth power semiconductor switch (S6) is connected to the junction between the third power semiconductor switch (S3) and the fourth power semiconductor switch (S4),
in which a top fault current path (A) or a bottom fault current path (B) in the converter subsystem (1) is detected, the top fault current path (A) running through the first, second, third and sixth power semiconductor switches (S1, S2, S3, S6) or through the first and fifth power semiconductor switches (S1, S5), and the bottom fault current path running through the second, third, fourth and fifth power semiconductor switches (S2, S3, S4, S5) or through the fourth and sixth power semiconductor switches (S4, S6), and
in which the actuatable bidirectional power semiconductor switches (S1, S2, S3, S4) are switched on the basis of a fault switching sequence,
**characterized**
**in that** the fault switching sequence in the event of detection of the top or the bottom fault current path (A, B) is followed by the detection's accompanying switching status of each actuatable bidirectional power semiconductor switch (S1, S2, S3, S4) being recorded,
**in that** in the event of detection of the top fault current path (A) the first power semiconductor switch (S1) and then the third power semiconductor (S3) are turned off, and
**in that** in the event of detection of the bottom fault current path (B) the fourth power semiconductor switch (S4) and then the second power semiconductor (S2) are turned off.

2. Method according to Claim 1, **characterized in that** the fifth and sixth power semiconductor switches (S5, S6) are actuatable bidirectional power semiconductor switches, and in the event of detection of the top fault current path (A) the sixth power semiconductor switch (S6) is turned on before the first power semiconductor switch (S1) is turned off, and in the event of detection of the bottom fault current path (B) the fifth power semiconductor switch (S5) is turned on before the fourth power semiconductor switch (4) is turned off.

3. Method according to Claim 1 or 2, **characterized in that** in the event of detection of the top fault current path (A) the third power semiconductor switch (S3) is turned off with a selectable delay time (tᵥ) relative to the first power semiconductor switch (S1), and **in that** in the event of detection of the bottom fault current path (B) the second power semiconductor switch (S2) is turned off with a selectable delay time (tᵥ) relative to the fourth power semiconductor switch (S4).

4. Method according to Claim 3, **characterized in that** the delay time (tᵥ) is selected in the order of magnitude of between 1µs and 5µs.

5. Method according to one of the preceding claims, **characterized in that** the actuatable bidirectional power semiconductor switches (S1, S2, S3, S4, S5, S6) in the converter subsystems (1) which are not affected by the fault are turned off.

6. Method according to one of Claims 1 to 5, **characterized in that** to detect the top or bottom fault current path (A, B) each actuatable bidirectional power semiconductor switch (S1, S2, S3, S4, S5, S6) is monitored for desaturation, and **in that** a current through the subconnection (5) is monitored for its direction.

7. Method according to Claim 6, **characterized in that** the top fault current path (A) is detected in the case of desaturation of the first, second, third, fifth or sixth actuatable bidirectional power semiconductor switch (S1, S2, S3, S4, S5, S6) and a current through the subconnection (5) in the direction of the DC voltage circuit (5), and
**in that** the bottom fault current path (B) is detected in the case of desaturation of the second, third, fourth, fifth or sixth actuatable bidirectional power semiconductor switch (S2, S3, S4, S5, S6) and a current through the subconnection (5) from the direction of the DC voltage circuit (5).

8. Method according to one of Claims 1 to 5, **characterized in that** to detect the top or bottom fault current path (A, B) each actuatable bidirectional power semiconductor switch (S2, S3, S4, S5, S6) is monitored for desaturation, and
**in that** a current through the first principal connection (3) and a current through the second principal connection (4) are monitored.

9. Method according to Claim 8, **characterized in that** the top fault current path (A) is detected in the case of desaturation of the first, second, third, fifth or sixth actuatable bidirectional power semiconductor switch (S1, S2, S3, S5, S6) and a current through the first principal connection (3), and **in that** the bottom fault current path (B) is detected in the case of desaturation of the second, third, fourth, fifth or sixth actuatable bidirectional power semiconductor switch (S2, S3, S4, S5, S6) and a current through the second principal connection (4).

10. Method according to one of Claims 1 to 5, **characterized in that** the anode/cathode voltage (Uce) of each actuatable bidirectional power semiconductor switch (S1, S2, S3, S4, S5, S6) is monitored for a threshold value (Uce, th),
**in that** the top fault current path (A) is detected
(a1) when the threshold value (Uce,th) is exceeded with one or more actuatable bidirectional power semiconductor switches (S1, S2, S3, S4, S5, S6) turned on and the fourth actuatable bidirectional power semiconductor switch (S4) turned off when the threshold value (Uce, th) is exceeded, or
(b1) when the threshold value (Uce,th) is exceeded with one or more actuatable bidirectional power semiconductor switches (S1, S2, S3, S4, S5, S6) turned on and the first actuatable bidirectional power semiconductor switch (S1) turned on, or
(c1) when the threshold value (Uce,th) is undershot with one or more actuatable bidirectional power semiconductor switches (S1, S2, S3, S4) turned off and the fourth actuatable bidirectional power semiconductor switch (S4) turned off when the threshold value (Uce,th) is exceeded, or
(d1) when the threshold value (Uce,th) is undershot with one or more actuatable bidirectional power semiconductor switches (S1, S2, S3, S4) turned off and the first actuatable bidirectional power semiconductor switch (S1) turned on,
and **in that** the bottom fault current path (B) is detected
(a2) when the threshold value (Uce,th) is exceeded with one or more actuatable bidirectional power semiconductor switches (S1, S2, S3, S4, S5, S6) turned on and the first actuatable bidirectional power semiconductor switch (S1) turned off when the threshold value (Uce,th) is exceeded, or
(b2) when the threshold value (Uce,th) is exceeded with one or more actuatable bidirectional power semiconductor switches (S1, S2, S3, S4, S5, S6) turned on and a fourth actuatable bidirectional power semiconductor switch (S4) turned on, or
(c2) when the threshold value (Uce,th) is undershot with one or more actuatable bidirectional power semiconductor switches (S1, S2, S3, S4) turned off and the first actuatable bidirectional power semiconductor switch (S1) turned off when the threshold value (Uce,th) is exceeded, or
(d2) when the threshold value (Uce,th) is undershot with one or more actuatable bidirectional power semiconductor switches (S1, S2, S3, S4) turned off and the fourth actuatable bidirectional power semiconductor switch (S4) turned on.

## Revendications

1. Procédé de traitement de défauts dans un circuit convertisseur pour la commutation de trois niveaux de tension, dans lequel le circuit convertisseur comporte un système de conversion partielle (1) prévu pour chaque phase (R, S, T) et comprend un circuit de tension continue (2) constitué de deux condensateurs commutés en série, le circuit de tension continue (2) comprenant un premier raccordement principal (3) et un deuxième raccordement principal (4) et un raccordement partiel (5) constitué de deux condensateurs voisins reliés entre eux et lequel procédé présente des premier, deuxième, troisième et quatrième commutateurs à grille de contrôle de puissance bidirectionnels contrôlables (S1, S2, S3, S4) et des cinquième et sixième commutateurs à grille de contrôle de puissance (S5, S6), les premier, deuxième, troisième et quatrième commutateurs à grille de contrôle de puissance (S1, S2, S3, S4) étant commutés en série et le premier commutateur à grille de contrôle de puissance (S1) étant relié au premier raccordement principal (3) et le quatrième commutateur à grille de contrôle de puissance (S4) étant relié au deuxième raccordement principal (4) et les cinquième et sixième commutateurs à grille de contrôle de puissance (S5, S6) étant commutés en série, le point de liaison du cinquième commutateur à grille de contrôle de puissance (S5) étant relié au sixième commutateur à grille de contrôle de puissance (S6) par le raccordement partiel (5), le cinquième commutateur à grille de contrôle de puissance (S5) étant relié par le point de liaison du premier commutateur à grille de contrôle de puissance (S1) au deuxième commutateur à grille de contrôle de puissance (S2) et le sixième commutateur à grille de contrôle de puissance (S6) étant relié par le point de liaison du troisième commutateur à grille de contrôle de puissance (S3) au quatrième commutateur à grille de contrôle de puissance (S4),
dans lequel une piste de courant de défaut supérieure (A) ou une piste de courant de défaut inférieure (B) est détectée dans le système de conversion partielle (1), la première piste de courant de défaut supérieure (A) passant par les premier, deuxième, troisième et sixième commutateurs à grille de contrôle de puissance (S1, S2, S3, S6) ou par les premier et cinquième commutateurs à grille de contrôle de puissance (S1, S5) et la piste de courant de défaut inférieure passant par les deuxième, troisième, quatrième et cinquième commutateurs à grille de contrôle de puissance (S2, S3, S4, S5) ou par les quatrième et sixième commutateurs à grille de contrôle de puissance (S4, S6) et
dans lequel les commutateurs à grille de contrôle de puissance bidirectionnels contrôlables (S1, S2, S3, S4) sont commutés après une séquence de commutation dans le défaut,
**caractérisé en ce que**,
après la séquence de commutation dans le défaut, dans le cas de la détection de la piste de courant de défaut supérieure ou inférieure (A, B), l'état de commutation existant à la détection de chaque commutateur à grille de contrôle de puissance bidirectionnel contrôlable (S1, S2, S3, S4) est maintenu,
**en ce que**, dans le cas de la détection de la piste de courant de défaut supérieure (A), le premier commutateur à grille de contrôle de puissance (S1) puis le troisième commutateur à grille de contrôle de puissance (S3) sont déconnectés et, **en ce que**, dans le cas de la détection de la piste de courant de défaut inférieure (B), le quatrième commutateur à grille de contrôle de puissance (S4) puis le deuxième commutateur à grille de contrôle de puissance (S2) sont déconnectés.

2. Procédé selon la revendication 1, **caractérisé en ce que** les cinquième et sixième commutateurs à grille de contrôle de puissance (S5, S6) sont des commutateurs à grille de contrôle de puissance bidirectionnels contrôlables, procédé dans lequel, dans le cas de la détection de la piste de courant de défaut supérieure (A), le sixième commutateur à grille de contrôle de puissance (S6) est connecté avant la déconnexion du premier commutateur à grille de contrôle de puissance (S1) et, dans le cas de la détection de la piste de courant de défaut inférieure (B), le cinquième commutateur à grille de contrôle de puissance (S5) est connecté avant la déconnexion du quatrième commutateur à grille de contrôle de puissance (S4).

3. Procédé selon la revendication 1 ou 2, **caractérisé en ce que**, dans le cas de la détection de la piste de courant de défaut supérieure (A), le troisième commutateur à grille de contrôle de puissance (S3) est déconnecté avec un temps de retard pouvant être choisi (tᵥ) par rapport au premier commutateur à grille de contrôle de puissance (S1) et **en ce que**, dans le cas de la détection de la piste de courant de défaut inférieure (B), le deuxième commutateur à grille de contrôle de puissance (S2) est déconnecté avec un temps de retard pouvant être choisi (tᵥ) par rapport au quatrième commutateur à grille de contrôle de puissance (S4).

4. Procédé selon la revendication 3, **caractérisé en ce que** le temps de retard (tᵥ) est choisi dans l'ordre de grandeur de 1 µs à 5 µs.

5. Procédé selon une des revendications précédentes, **caractérisé en ce que** les commutateurs à grille de contrôle de puissance bidirectionnels contrôlables (S1, S2, S3, S4, S5, S6) des systèmes de conversion partielle (1) non concernés par le défaut sont déconnectés.

6. Procédé selon une des revendications 1 à 5, **caractérisé en ce que**, pour la détection de la piste de courant de défaut supérieure ou inférieure (A, B), on surveille la désaturation de chaque commutateur à grille de contrôle de puissance bidirectionnel contrôlable (S1, S2, S3, S4, S5, S6) et
**en ce qu'**on surveille le sens d'un courant à travers le raccordement partiel (5).

7. Procédé selon la revendication 6, **caractérisé en ce que** la piste de courant de défaut supérieure (A) est détectée en cas de désaturation du premier, deuxième, troisième, cinquième ou sixième commutateur à grille de contrôle de puissance bidirectionnel contrôlable (S1, S2, S3, S5, S6) et de courant à travers le raccordement partiel (5) en direction du circuit de tension continue (2) et
**en ce que** la piste de courant de défaut inférieure (B) est détectée en cas de désaturation du deuxième, troisième, quatrième, cinquième ou sixième commutateur à grille de contrôle de puissance bidirectionnel contrôlable (S2, S3, S4, S5, S6) et de courant à travers le raccordement partiel (5) en provenance du circuit de tension continue (2).

8. Procédé selon une des revendications 1 à 5, **caractérisé en ce que**, pour la détection de la piste de courant de défaut supérieure ou inférieure (A, B), on surveille la désaturation de chaque commutateur à grille de contrôle de puissance bidirectionnel contrôlable (S1, S2, S3, S4, S5, S6) et
**en ce qu'**on surveille un courant à travers le premier raccordement principal (3) et un courant à travers le deuxième raccordement principal (4).

9. Procédé selon la revendication 8, **caractérisé en ce que** la piste de courant de défaut supérieure (A) est détectée en cas de désaturation du premier, deuxième, troisième, cinquième ou sixième commutateur à grille de contrôle de puissance bidirectionnel contrôlable (S1, S2, S3, S5, S6) et de courant à travers le premier raccordement principal (3) et **en ce que** la piste de courant de défaut inférieure (B) est détectée en cas de désaturation du deuxième, troisième, quatrième, cinquième ou sixième commutateur à grille de contrôle de puissance bidirectionnel contrôlable (S2, S3, S4, S5, S6) et de courant à travers le deuxième raccordement principal (4).

10. Procédé selon une des revendications 1 à 5, **caractérisé en ce qu'**on surveille une valeur seuil (Uce,th) de la tension anode-cathode (Uce) de chaque commutateur à grille de contrôle de puissance bidirectionnel contrôlable (S2, S3, S4, S5, S6),
**en ce que** la piste de courant de défaut supérieure (A) est détectée
(a1) en cas de dépassement de la valeur seuil (Uce,th) dans le cas de la connexion d'un ou plusieurs commutateurs à grille de contrôle de puissance bidirectionnels contrôlables (S1, S2, S3, S4, S5, S6) et de la déconnexion du quatrième commutateur à grille de contrôle de puissance bidirectionnel contrôlable (S4) avec une valeur seuil (Uce,th) dépassée ou
(b1) en cas de dépassement de la valeur seuil (Uce,th) dans le cas de la connexion d'un ou plusieurs commutateurs à grille de contrôle de puissance bidirectionnels contrôlables (S1, S2, S3, S4, S5, S6) et de la connexion du premier commutateur à grille de contrôle de puissance bidirectionnel contrôlable (S1) ou
(c1) en cas de sous-dépassement de la valeur seuil (Uce,th) dans le cas de la déconnexion d'un ou plusieurs commutateurs à grille de contrôle de puissance bidirectionnels contrôlables (S1, S2, S3, S4) et de la déconnexion du quatrième commutateur à grille de contrôle de puissance bidirectionnel contrôlable (S4) avec une valeur seuil (Uce,th) dépassée ou
(d1) en cas de sous-dépassement de la valeur seuil (Uce,th) dans le cas de la déconnexion d'un ou plusieurs commutateurs à grille de contrôle de puissance bidirectionnels contrôlables (S1, S2, S3, S4) et de la connexion du premier commutateur à grille de contrôle de puissance bidirectionnel contrôlable (S1)
et **en ce que** la piste de courant de défaut inférieure (B) est détectée
(a2) en cas de dépassement de la valeur seuil (Uce,th) dans le cas de la connexion d'un ou plusieurs commutateurs à grille de la contrôle de puissance bidirectionnels contrôlables (S1, S2, S3, S4, S5, S6) et de la déconnexion du premier commutateur à grille de contrôle de puissance bidirectionnel contrôlable (S1) avec une valeur seuil (Uce,th) dépassée ou
(b2) en cas de dépassement de la valeur seuil (Uce,th) dans le cas de la connexion d'un ou plusieurs commutateurs à grille de contrôle de puissance bidirectionnels contrôlables (S1, S2, S3, S4, S5, S6) et de la connexion du quatrième commutateur à grille de contrôle de puissance bidirectionnel contrôlable (S4) ou
(c2) en cas de sous-dépassement de la valeur seuil (Uce,th) dans le cas de la déconnexion d'un ou plusieurs commutateurs à grille de contrôle de puissance bidirectionnels contrôlables (S1, S2, S3, S4) et de la déconnexion du premier commutateur à grille de contrôle de puissance bidirectionnel contrôlable (S1) avec une valeur seuil (Uce,th) dépassée ou
(d2) en cas de sous-dépassement de la valeur seuil (Uce,th) dans le cas de la déconnexion d'un ou plusieurs commutateurs à grille de contrôle de puissance bidirectionnels contrôlables (S1, S2, S3, S4) et de la connexion du quatrième commutateur à grille de contrôle de puissance bidirectionnel contrôlable (S4).
